# EUROPEAN PATENT SPECIFICATION

(11) **EP 1 202 939 B1**
(45) Date of publication and mention of the grant of the patent: **21.05.2003**
(21) Application number: 00948945.1
(22) Date of filing: 25.07.2000
(51) Int. Cl.: C03B 37/08

(54) **BUSHING BLOCK MOUNTING FRAME**
DÜSENEINHEIT
CHASSIS DE MONTAGE DE BLOC DE DOUILLE

(30) Priority: 30.07.1999 US 364850
(43) Date of publication of application: 08.05.2002
(73) Proprietor: OWENS CORNING, Toledo, Ohio 43659 (US)
(72) Inventor: SULLIVAN, Timothy, A., Newark, OH 43055 (US); BROWN, Kenny, A., Jackson, TN 38305 (US); HARE, James, L., Canyon, TX 79015 (US); EMERSON, Jack, L., Newark, OH 43055 (US)
(74) Representative: West, Alan Harry
(86) International application number: US0020208
(87) International publication number: WO01009050

(56) References cited:
- US-A- 4 704 150

## Description

The present invention relates to furnaces for forming attenuated glass fibers, and more particularly, to a frame for mounting a bushing block to a forehearth section of the furnace.

Attenuated glass fibers used, for example, as reinforcing fibers in fiberglass composite products, are formed, such as, by melting glass in a furnace and then drawing the molten glass through a bushing mounted to a forehearth section of the furnace. The bushing typically includes an elongated rectangular shape having one or more orifices therethrough. Molten glass flows through the bushing and exits the bushing through the one or more orifices to become attenuated, the individual fibers of which are thereafter coated with a sizing composition and combined to form a fiberglass strand. The bushing is typically supported by a bushing frame, which is mounted by one or more support bars to a support plate portion of the forehearth section of the furnace.

Because the bushing is exposed to extreme temperatures and adverse operating conditions, it is desirable for the bushing to be removable from the forenearth section of the furnace, such that a worn bushing may be replaced with a new bushing, when necessary. Each time a new bushing is mounted directly to the forehearth section of the furnace, the bushing and the surrounding forehearth section of the furnace must be cooled to permit removal of the worn bushing. Moreover, it typically is necessary for a mating surface of the forehearth to be machined, such that a mating surface of the new bushing may sealingly abut the mating surface of the forehearth to prevent leakage of the molten glass as it flows from the forehearth and into the bushing. However, repeated cooling (and associated thermal shock) and machining of the mating surface of the forehearth, such as after the bushing has been replaced several times, may cause excessive damage thereto, ultimately resulting in replacement of the entire forehearth section of the furnace altogether.

Accordingly, a block of refractory material, typically referred to as a "bushing block", is oftentimes interposed between the forehearth and the bushing, wherein the mating surface of the forehearth sealingly abuts an upper sealing surface of the block and wherein the sealing surface of the bushing sealingly abuts a lower sealing surface of the block. Removal and replacement of the bushing, then, requires only that the block be cooled and machined, rather than cooling and machining the forehearth section itself. Accordingly, it is the block, and not the forehearth, that is subjected to significant cooling, thermal shock and machining. Replacing a damaged or worn block is significantly less expensive than replacing a damaged forehearth section. If, after the block becomes damaged due to thermal shock or has been machined one or more times such that insufficient material remains on the bushing block to form a sealing fit between the bushing and the bushing block, the damaged block is replaced with a new block.

US-A-4,704,150 teaches a bushing assembly having two bushings, a production bushing and a permanent bushing, attached to a forehearth. The permanent bushing is fastened to a forehearth iron by bolts. A bushing frame is attached to the forehearth using a clamp. The bushings are electrically isolated from one another by an insulation gasket.

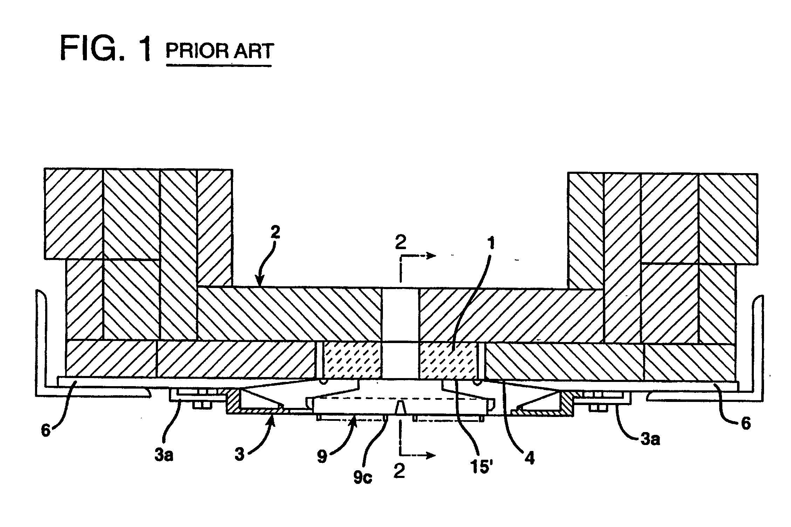

With combined reference to Figs. 1-3, the bushing block 1 typically is an elongated member and is positioned between the forehearth section 2 of the Furnace and the bushing 9. The block 1 is held against an underside surface of the forehearth 2 by first and second support bars 4, 5, each of which laterally spans one end of the block 1 and is bolted to a support plate 6 portion of the forehearth 2, which surrounds the block 1. The support bars 4, 5 clamp the ends of the block 1 to the forehearth, thereby providing the necessary sealing fit between the forehearth 2 and the block 1.

The bushing 9 is positioned, such as, for example, by bushing frame 3 bolted to the forehearth section 2 by support lugs 3a, beneath the bushing block 1 and held against the bushing block 1 to create a sealing fit therebetween. Positioning rods 7 depend from the support bars 4,5 and engage cyclets 3b extending from the bushing frame 3 to align the bushing 9 with the block 1.

Because the bushing 9 must sealingly contact the block 1, and because support bars 4, 5 are positioned below a lower surface of the block, the bushing 9 must reside entirely between the support bars 4, 5, and as such, the bushing 9 cannot have a length L_{B} which is greater than the distance L_{S} between the support bars 4, 5. Moreover, it is typical for the bushing frame 3 to be mounted to the forehearth 2 such that the bushing frame 3 resides entirely between the support bars 4, 5. Accordingly, the length L_{B} of the bushing 9 is often much short, sometimes by as much as 10 to 12.5 cm (4-5 inches), than the length L_{R} of the bushing block 1. Improved, longer bushing designs, then, are incapable of being mounted to older furnaces, as the distance L_{S} between support bars 4, 5 will not receive an improved bushing (and the bushing frame used to support it) therebetween. It is therefore desirable to provide a frame for supporting a bushing block between a forehearth section of a furnace and a bushing, wherein the size of the bushing is not unnecessarily limited by the size of the block or frame.

The midsection of the block 1 includes an elongated orifice 1a which permits flow-through communication of molten glass from the forehearth 2 to the bushing 9, and particularly, to one or more dispensing orifices 9c of the bushing 9. The orifice 1a must be free from obstructions, and as such, the midsection of the block 1 typically is substantially unsupported, as any support nember, such as the support bars 4, 5 used to support the ends of the block 1, would span the orifice 1a, thereby obstructing same. Fracture of the block 1, then, at any location between the support bars 4, 5, may result in the block 1 falling away from the forehearth 2 during a bushing change, thereby threatening furnace operation and production efficiency. A fractured block 1 would also be incapable of forming a sealed fir with any bushing 9 held thereagainst, thereby requiring total replacement of the block 1. Fracture of the block 1 is particularly likely when the block 1 is cooled, such as by quenching, thereby subjecting the block to significant thermal shock stresses. It is therefore desirable to provide a frame for supporting a bushing block adjacent a forehearth section of a furnace, wherein a midsection of the block is substantially supported.

Supporting the bushing block 1, such as, by clamping its ends to the forehearth section 2 with support bars 4, 5, also creates areas of raised stress within the block 1, thereby increasing the likelihood that the block 1 may fracture. Accordingly, it is therefore desirable to provide a frame for supporting a block adjacent a forehearth section of a furnace, wherein the block is held firmly thereby, but wherein the frame does not created unnecessary stresses in the block.

Moreover, because failure of the block 1 jeopardizes furnace operation and efficiency, the risk of block failure must be minimized. Accordingly, the block 1 may be constructed from only a handful of acceptable materials which are highly resistant to thermal shock, possess excellent glass corrosion resistance and have a relatively high tensile strength. In many cases, the selection of a material having satisfactory strength, resistance to corrosion and machinability may not be permitted because such material has inadequate resistance to thermal shock As a result, the full range of permitted materials is unacceptably narrow. That is, because failure of a bushing block raises the threat of catastrophic machine failure, experimental use of materials having excellent strength, corrosion resistance and machinability (but having less than the desired resistance to thermal shock) is discouraged. It is therefore desirable to provide a frame for supporting a bushing block against a forehearth section of a furnace, wherein the block is sufficiently supported such that the risk of catastrophic machine failure as a result of block failure is substantially reduce, thereby permitting experimental use of bushing block materials. It is also desirable to provide a bushing system for use in a furnace, wherein a bushing block of the system may be manufactured out of any of a wide variety of acceptable materials.

In accordance with the invention there is now provided a bushing block assembly adapted to be positioned between a forehearth and a bushing, the bushing block assembly comprising:
a bushing block having an orifice providing flow-through communication between the forehearth and the bushing and a downwardly facing shoulder extending around the periphery thereof; and
a bushing block mounting frame having an inwardly protecting ledge defining an opening for receiving the bushing block and for supporting the shoulder substantially completely around the periphery of the bushing block.

According to the invention there is provided also a bushing system adapted to be coupled to a forehearth comprising:
a bushing block assembly as defined above in accordance with the invention; and
a bushing assembly including a bushing and a bushing support frame adatped to be coupled to one of the bushing block mounting frame and the forehearth and wherein the bushing has a length which is substantially equal to or greater than that of the bushing block.

The present invention therefore provides an arrangement for supporting a bushing block between a forehearth section of a direct-heat glass-melting furnace and an attenuating bushing mounted therebelow. The system includes a generally rectangular bushing block mounting frame constructed from stainless steel and mounted to the forehearth section, such as, for example, by bolts, such that the bushing block mounting frame may be removed from the forehearth section to permit replacement of the bushing block. The bushing block mounting frame defines an opening sized to at least partially receive a bushing block therein, and includes a peripheral ledge therearound for suspending the bushing block within the opening.

The bushing block is constructed from a suitable refractory material and includes a peripheral shoulder therearound which seats within the peripheral ledge of the bushing block mounting flame substantially around the periphery of the bushing block. the bushing block, then, suspends from, and is supported by, the bushing block mounting frame and held against the forehearth section such that an upper sealing surface of the bushing block sealingly abuts a sealing surface of the forehearth section. Preferably, the peripheral shoulder is located between upper and lower sealing surfaces of the bushing block, such that a lower portion of the bushing block depends through the opening of the bushing block mounting frame when the peripheral shoulder of the bushing block is seated within the peripheral ledge of the bushing block mounting frame.

The bushing is held against the bushing block by a bushing frame such that the lower seating surface of the bushing block sealingly abuts a sealing surface of the bushing. The bushing frame is mounted to the forehearth section, such as, for example, by support lugs bolted to a support plate portion of the forchearh, and may be removed from the forehearth to permit replacement of the bushing. A slot-shaped orifice is provided through the bushing block to permit molten glass to be in flow-through communication between the forehearth and the bushing.

A bushing block assembly according to a preferred embodiment of the present invention is provided, wherein the bushing block assembly is adapted to be positioned between a forehearth and a bushing, and wherein the bushing is mounted to the furnace by a bushing frame, and comprises a bushing block having an orifice and a peripheral shoulder, the orifice providing flow-through communication between the forehearth and the bushing, and a bushing block mounting frame having a peripheral ledge defining an opening for partially receiving the bushing block therein.

A better understanding of the present invention will be had upon reference to the following description in conjunction with the accompanying drawings in which like reference numerals represent like parts, and wherein:
Fig. 1 is an end section view of a forehearth section of a prior art furnace, showing a bushing mounted to the forehearth section by support Iugs, and showing a bushing block mounted to the forehearth section between the forehearth section and the bushing;
Fig. 2 is a side section view of the forehearth section of the prior art furnace of Fig. 1, taken along section line 2-2 of Fig. 1, showing the bushing block clamped to the forehearth section by support bars, and showing bushing positioned beneath the bushing block by positioning rods;
Fig. 3 is a partial underside view of one end of the forehearth section of the prior art furnace of Fig. 1, wherein the bushing has been removed therefrom, and wherein the bushing block is shown clamped to the forehearth section by one of the support bars;
Fig. 4 is an end section view of a forehearth section of a furnace, showing a bushing mounted to the forehearth section by support lugs, and showing a bushing block mounting system according to a preferred embodiment of the present invention mounted between the forehearth section and the bushing;
Fig. 5 is an exploded perspective view of the bushing block mounting system of Fig. 4;
Fig. 6 is a side section view of the forehearth section and bushing of Fig. 4, showing the bushing block mounting system of Fig. 4 mounted therebetween;
Fig. 7 is a detail end section view of a forehearth section and bushing, showing a bushing block mounting system according to an alternative embodiment of the present invention mounted therebetween;
Fig. 8 is an underside view of the forehearth section of Fig. 4, showing the bushing in phantom lines being mounted to the forehearth section by the support lugs; and,
Fig. 9 is a side section view of the forehearth section of Fig. 8, showing the positioning rods.

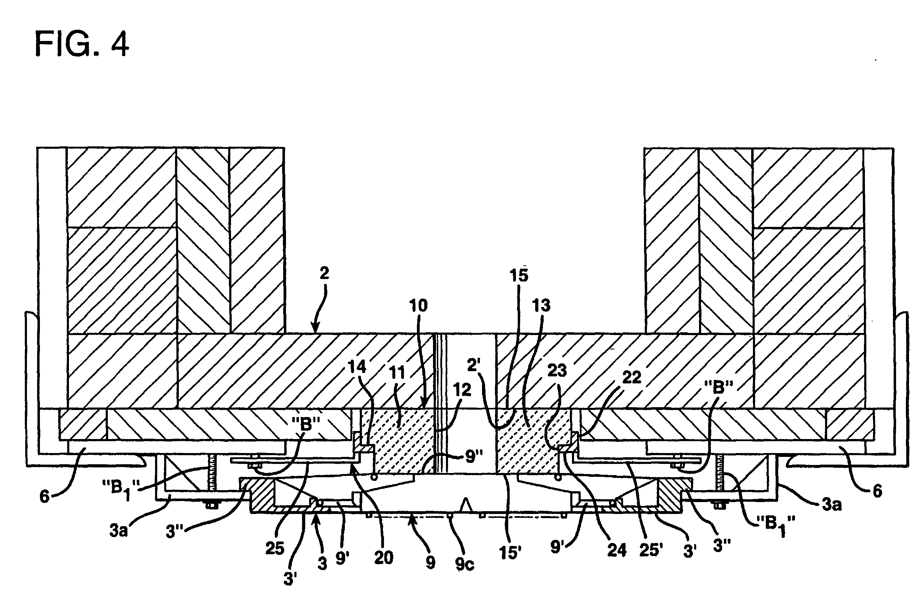

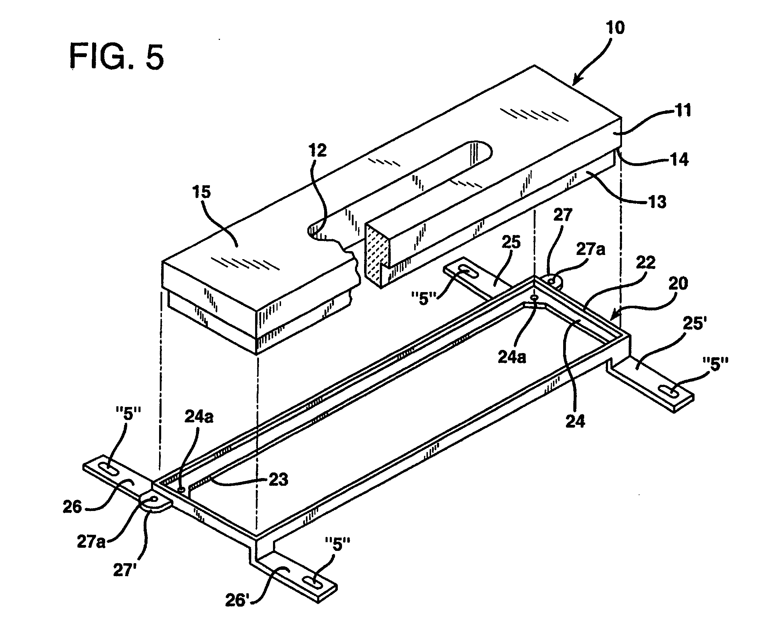

With combined reference to Figs. 4-6, a bushing block mounting system according to a preferred embodiment of the present invention includes a bushing block 10 and a bushing block mounting frame 20 positioning the bushing block 10 between a forehearth section 2 of a conventional direct-heat glass-melting furnace and a conventional attenuating bushing 9. The bushing block 10 inciudes an elongated orifice 12 to permit flow-through communication between the forehearth section 2 and the bushing 9. The orifice 12 may be any size, shape or geometry which delivers molten glass from the forehearth 2 to the bushing 9 at a predetermined rate. The bushing 9 is of a conventional configuration, and includes one or more orifices 9c, which receive molten glass from the bushing block 10 and thereby form one or more attenuated glass fibers of molten glass exiting the bushing 9 theretbrough.

The bushing block 10 preferably is constructed from any suitable refractory material, such as zircon, and includes a generally rectangular shape having a shoulder 14 which continues substantially around the periphery of the bushing block 10, thereby defining an upper portion 11 of the bushing block 10 residing above the shoulder 14 and a lower portion 13 of the bushing block 10 residing below the shoulder 14. The upper portion 11 of the bushing block 10 includes an upper mating surface 15 which sealingly abuts a mating surface 2' of the forehearth section 2 of the furnace to provide sealed flow-through communication of molten glass from the forehearth 2, through the orifice 12 of the bushing block 10 and into the bushing 9.

The frame 20 preferably is constructed from stainless steel, or any other high-temperature alloy known to those skilled in the art, and is of a generally rectangular shape defining a generally rectangular opening 23 for at least partially receiving the block 10 therein. Frame 20 includes a peripheral upstanding side wall 22 and a peripheral ledge 24 projecting inwardly therefrom. The side wall 22 and peripheral ledge 24 are also referred to herein as a structure. First and second front-end arms 25, 25', respectively, Project away from a front end of the frame 20 and are spaced vertically below the ledge 24 by the upstanding wall 22. First and second rear-end arms 26, 26', respectively, project sway from a rear end of the frame 20 and are spaced vertically below the ledge 24 by the upstanding wall 22. Arms 25, 25', 26, 26' cooperate to mount the frame 20 to the forehearth section 2 of the furnace, such as, by bolts "B" through slots "S".

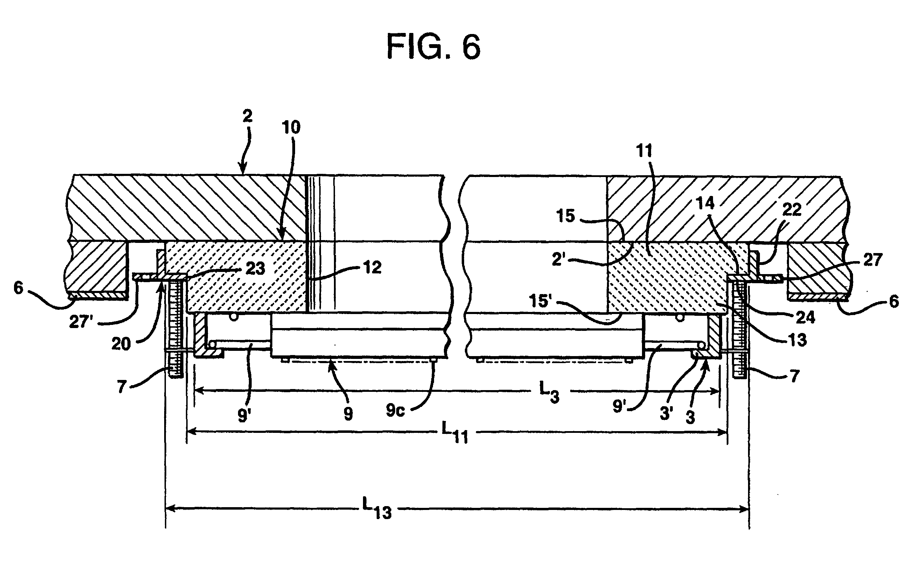

A conventional bushing frame 3 is used to sealingly position the bushing 9 against the bushing block 10 and includes a first lip 3' upon which arms 9' of the bushing 9 rest. One or more threaded positioning rods 7 (shown in Fig. 6) are secured to the frame 20, such as by threaded holes 24a in the ledge 24, and depend dowawardly therefrom to permit the bushing frame 3 to be positioned relative to the bushing block frame 20. Alternatively, rods 7 may be fixedly secured to the bushing block frame 20, such as, by welding. First and second tabs 27, 27', respectively, project outwardly from the frame 20, along a lengthwise direction thereof, each having a threaded hole 27a spared along the lengthwise direction of the frame 20 from the holes 24a by a short distanec, such as, for example 1 inch. The tabs 27, 27' are preferably coplanar with the ledge 24 of the frame 20.

The bushing frame 3 is mounted to the support plate 6 of the forehearth 2 by one or more support lugs 3a (see, Fig. 4), which engage a second lip 3" of the bushing frame 3 and clamp the bushing frame 3 against the forehearth 2, such as by bolts "B₁".

Shoulder 14 of block 10 seats within, and is contained, by upstanding wall 22 and by ledge 24 to hold the block 10 securely therein. The ledge 24 is positioned on the upstanding wall 22 such that the lower portion 13 of the block 10 is suspended downwardly through the opening 23, whereas the upper portion 11 of the block 10 resides above the ledge 24. Arms 25, 25', 26, 26' are spaced vertically below the ledge 24 such that, when the frame 20 is mounted to the forehearth section 2, the upper sealing surface 15 of the block 10 sealingly abuts the sealing surface 2' of the forehearth 2. Arms 25, 25', 26, 26' are shown as being substantially planar; however, arms 25, 25', 26, 26' may have non-planar portions (not shown) for mounting the frame 20 to the forehearth 2 around portions of the forehearth 2, for example, the bushing frame 3. Moreover, lower portion 13 of block 10 depends from the opening 23 a sufficient distance to permit the lower scaling surface 15' of the block 10 to sealingly abut the sealing surface 9" of the bushing 9.

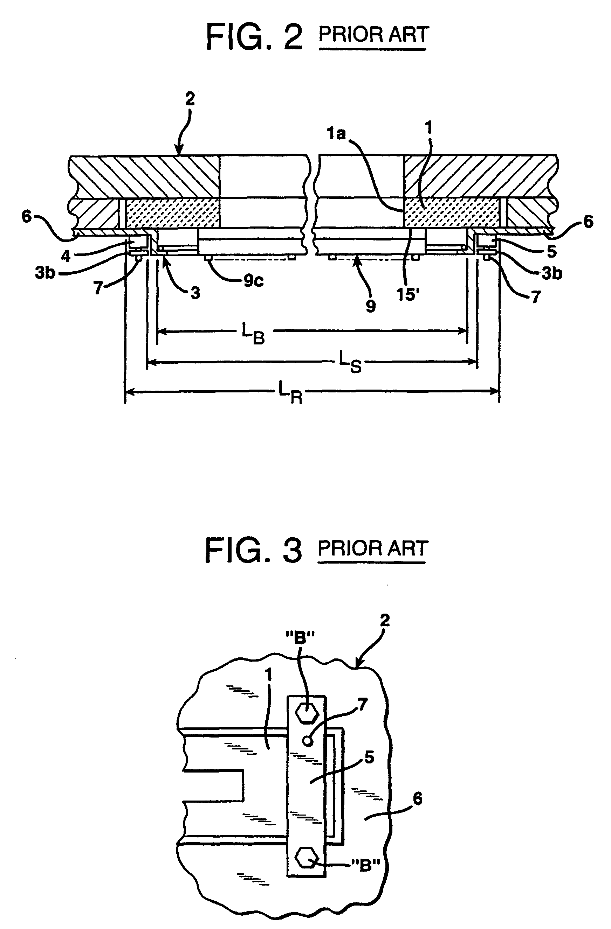

Support bars 4, 5 (Fig. 2) of the prior art are not required to mount the block 10 to the foreheacth 2 because the block 10 is supported substantially around its entire periphery by the frame 20. Moreover, because the block 10 is supported at the shoulder 14, which is vertically spaced above the lower sealing surface 15' of the block 10, substantially all of the lower sealing surface 15' of the block 15 is exposed to the bushing 9 and to the bushing frame 3, thereby permitting a bushing frame 3 with a length L₃ which is less than the length L₁₃ of the upper portion 11 of the block 10 and which is substantially the same as the length L₁₁ of the lower portion 13 of the block 10 to be positioned therebelow.

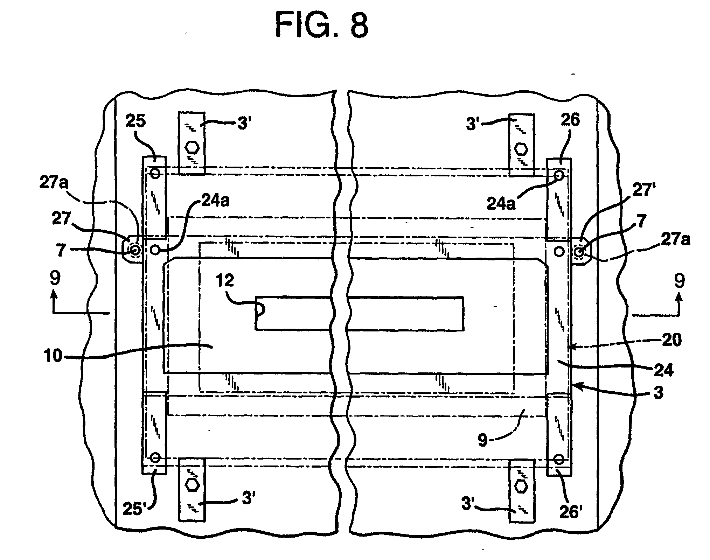

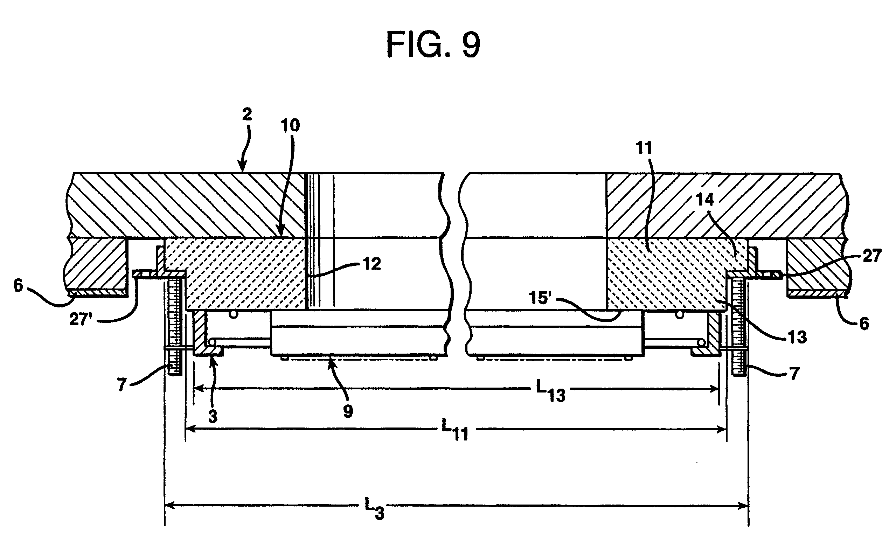

Even further, because the lower sealing surface 15' of the block 10 depends vertically below the arms 25, 25', 26, 26', a bushing 9 having a length which is greater than the length L₁₁ of the block 10 may be positioned therebelow, so long as a main body portion of the bushing 9 is able to seal against the bushing block 10. For example, referring to Figs. 8 and 9, positioning rods 7 may be secured to tab holes 27a, rather than to holes 24a, thereby permitting a longer bushing frame 3 supporting a longer bushing 9 to be positioned between the threaded rods 7, while still being sealingly positioned against the bushing block 10, such that the length L₃ of the bushing frame 3 (and of the bushing 9 supported therein) is greater than the lengths L₁₃, L₁₁ of the block 10. In this manner, improved, longer bushings may be affixed to the forehearth sections of older furnaces, which, heretofore, was not permitted due to the size limitations of the support bars 4, 5 (Fig. 2).

Moreover, because the block 10 is supported by the frame 20 substantially around its periphery, fracture of the block 10, while seated within the flame 20, will not cause the block 10 to fall out of the frame 20. The threat of catastrophic machine failure, then, is substantially eliminated. As a result, the block 10 may be constructed of an experimental malarial which, in the prior art, may not have been attempted for fear of fracture resulting in the catasuophic machine failure. The flame 20 of the present invention safeguards against machine failure by continuing to support the block 10 therein, even after fracture of the block 10, for example, as a result of thermal shock. The frame 20 securely retains the bushing block 10 and provides sufficient clamping force to create a sealing fit between the upper surface of the bushing block 10 and the sealing surface of the forehearth 2, but does not create excessive or unnecessary compressive forces within the block 10.

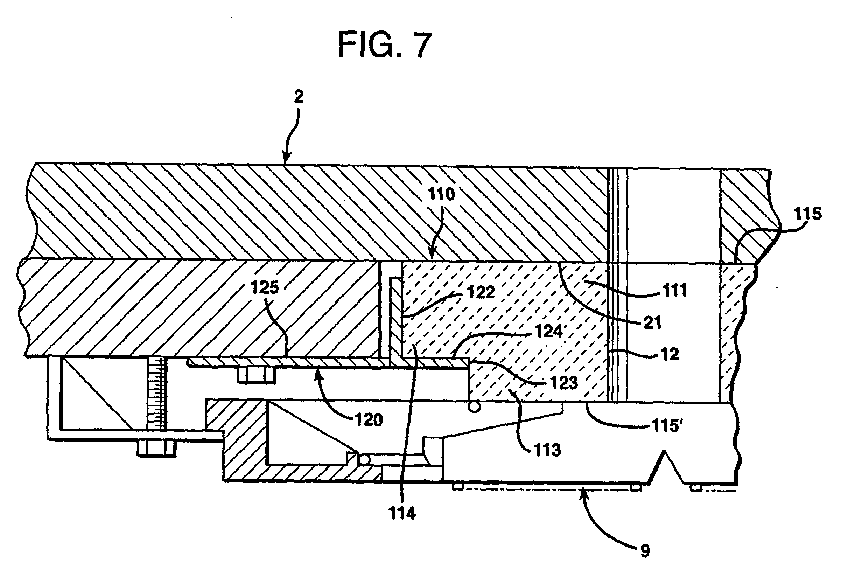

With reference to Fig. 7, a bushing block mounting system according to an alternative embodiment of the present invention includes many components in common with the bushing block system of the preferred embodiment hereof and like reference numerals are intended to represent like components. However, the bushing block mounting system according to the present embodiment includes a mounting flame 120 defining an opening 123 and having a peripheral upstanding side wall 122 and a peripheral ledge 124 projecting inwardly therefrom. Unlike the frame 20 (Fig. 4) according to the preferred embodiment hereof, wherein the ledge 24 (Fig. 4) is spaced vertically above arms 25, 25', 26, 26' (Fig. 4), the ledge 124 of the frame 120 of the present embodiment is substantially coplanar with arms (only arm 125 being shown in Fig. 7) projecting outwardly therefrom for mounting of the frame 120 to the forehearth 2 as described hereinabove. A block 110 having a shoulder 114 is at least partially received in the opening 123 as described above such that a lower portion 113 of the block 110 is suspended by the shoulder 114 and such that an upper portion 111 of the block 110 is seated within the frame 120. The block 110 is positioned between the forehearth 2 and the bushing 9 (Fig. 4) such that an upper sealing surface 115 of the block 110 sealingly abuts a sealing surface 2' of the forehearth and 8 lower sealing surface 115' of the block 110 sealingly abuts a sealing surface of the bushing 9 as described above.

## Claims

1. A bushing block assembly (10) adapted to be positioned between a forehearth (2) and a bushing (9), the bushing block assembly comprising:
a bushing block (11) having an orifice (12) providing flow-through communication between the forehearth and the bushing and a downwardly facing shoulder (14) extending around the periphery thereof; and
a bushing block mounting frame (20) having an inwardly projecting ledge (24) defining an opening (23) for receiving the bushing block (10) and for supporting the shoulder (14) substantially completely around the periphery of the bushing block.

2. A bushing block assembly according to claim 1, wherein the mounting frame (20) further includes an upstanding portion (22) around the outer periphery of the ledge (24) defining a seat for receiving the bushing block (10).

3. A bushing block assembly according to claim 1 or claim 2, wherein the shoulder (14) defines upper (11) and lower (13) portions of the bushing block (10), the lower portion (13) being received by the opening (23) in the mounting frame (20) and the upper portion (11) being seated within the seat.

4. A bushing block assembly according to any one of claims 1 to 3, wherein the mounting frame (20) includes outwardly projecting arms (25,25',26,26') by means of which the assembly can be mounted to the forehearth (2).

5. A bushing system adapted to be coupled to a forehearth (2), comprising:
a bushing block assembly according to any one of claims 1 to 4; and
a bushing assembly including a bushing (9) and a bushing support frame (3), adapted to be coupled to one of the bushing block mounting frame (20) and the forehearth (2), and wherein the bushing has a length which is substantially equal to or greater than that of the bushing block (10).

## Patentansprüche

1. Düsenblockanordnung (10) zum Anordnen zwischen einem Vorwärmer (2) und einer Düse (9), wobei die Düsenblockanordnung aufweist:
einen Düsenblock (1) mit einer Öffnung (12), die eine Durchgangsverbindung zwischen dem Vorwärmer und der Düse bildet, sowie mit einer um seinen Rand verlaufenden, nach unten gerichteten Schulter (14), und
einen Düsenblock-Halterahmen (20) mit einer nach innen ragenden Leiste (24), die eine Öffnung (23) zur Aufnahme des Düsenblocks (10) und zur Abstützung der Schulter (14) im wesentlichen längs des gesamten Randes des Düsenblocks bildet.

2. Düsenblockanordnung nach Anspruch 1, wobei der Halterahmen (20) am Außenrand der Leiste (24) einen nach oben ragenden Teil (22) aufweist, der einen Sitz zur Aufnahme des Düsenblocks (10) bildet.

3. Düsenblockanordnung nach Anspruch 1 oder 2, wobei die Schulter (14) einen oberen Teil (11) und einen unteren Teil (13) des Düsenblocks (10) definiert, von denen der untere Teil (13) von der Öffnung (23) in dem Halterahmen (20) aufgenommen ist und der obere Teil (11) innerhalb des Sitzes aufliegt.

4. Düsenblockanordnung nach einem der Ansprüche 1 bis 3, wobei der Halterahmen (20) nach außen ragende Arme (25, 25', 26, 26') aufweist, mit denen sich die Anordnung an dem Vorwärmer (2) anbringen läßt.

5. Düsensystem zum Ankoppeln an einen Vorwärmer (2) mit
einer Düsenblockanordnung nach einem der Ansprüche 1 bis 4 und
einer eine Düse (9) und einen Düsentragrahmen (3) aufweisenden Düsenanordnung zum Ankoppeln an den Düsenblock-Halterahmen (20) oder den Vorwärmer (2), wobei die Düse eine Länge hat, die im wesentlichen gleich oder größer ist als die des Düsenblocks (10).

## Revendications

1. Ensemble formant bloc de filière (10) adapté pour être positionné entre un avant-corps de four (2) et une filière (9), l'ensemble formant bloc de filière comprenant:
un bloc de filière (10) comportant un orifice (12) assurant un passage de communication entre l'avant-corps de four et la filière, et un épaulement (14) tourné vers le bas qui s'étend autour de sa périphérie; et
un châssis de montage de bloc de filière (20) comportant un rebord (24) faisant saillie vers l'intérieur et définissant une ouverture (23) destinée à recevoir le bloc de filière (10) et à supporter l'épaulement (14) sensiblement entièrement autour de la périphérie du bloc de filière.

2. Ensemble formant bloc de filière selon la revendication 1, dans lequel le châssis de montage (20) comprend, en outre, une partie montante (22) autour de la périphérie extérieure du rebord (24), qui définit un siège pour recevoir le bloc de filière (10).

3. Ensemble formant bloc de filière selon la revendication 1 ou la revendication 2, dans lequel l'épaulement (14) définit des parties supérieure (11) et inférieure (13) du bloc de filière (10), la partie inférieure (13) étant reçue par l'ouverture (23) définie dans le châssis de montage (20), tandis que la partie supérieure (11) est en appui dans le siège.

4. Ensemble formant bloc de filière selon l'une quelconque des revendications 1 à 3, dans lequel le châssis de montage (20) comprend des bras (25, 25', 26, 26') qui font saillie vers l'extérieur et au moyen desquels l'ensemble peut être monté sur l'avant-corps de four (2).

5. Système de filière adapté pour être relié à un avant-corps de four (2), comprenant:
un ensemble formant bloc de filière selon l'une quelconque des revendications 1 à 4; et
un ensemble formant filière comprenant une filière (9) et un châssis de support de filière (3), adapté pour être relié au châssis de montage de bloc de filière (20) ou à l'avant-corps de four (2), et dans lequel la filière a une longueur sensiblement égale ou supérieure à celle du bloc de filière (10).
